(19) Europäisches Patentamt
European Patent Office
Office européen des brevets

(11) **EP 4 207 072 A1**

(12) **EUROPEAN PATENT APPLICATION**

(43) Date of publication:
**05.07.2023 Bulletin 2023/27**

(21) Application number: **22214090.7**

(22) Date of filing: **16.12.2022**

(51) International Patent Classification (IPC):
**G06T 7/73** (2017.01)

(52) Cooperative Patent Classification (CPC):
**G06T 7/75; G06T 2207/30252**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 CN 202111602127**

(71) Applicant: **Beijing Baidu Netcom Science Technology Co., Ltd.**
**Beijing 100085 (CN)**

(72) Inventors:
• **LIU, Fuqiang**
**Beijing, 100085 (CN)**

• **CAI, Zhongqiang**
**Beijing, 100085 (CN)**
• **GUO, Yu**
**Beijing, 100085 (CN)**
• **CHEN, Yan**
**Beijing, 100085 (CN)**
• **WAN, Ji**
**Beijing, 100085 (CN)**
• **WANG, Jun**
**Beijing, 100085 (CN)**
• **WANG, Liang**
**Beijing, 100085 (CN)**
• **MA, Huimin**
**Beijing, 100085 (CN)**

(74) Representative: **Deambrogi, Edgardo et al**
**Jacobacci & Partners S.p.A.**
**Corso Emilia 8**
**10152 Torino (IT)**

(54) **THREE-DIMENSIONAL DATA AUGMENTATION METHOD, MODEL TRAINING AND DETECTION METHOD, DEVICE, AND AUTONOMOUS VEHICLE**

(57) Provided are a three-dimensional data augmentation method, a model training and detection method, a device, and an autonomous vehicle that relate to the field of data processing and, in particular, to fields of deep learning and autonomous driving. The method includes that an original two-dimensional image and truth value annotation data matching the original two-dimensional image are acquired, that the original two-dimensional image and two-dimensional truth value annotation data are transformed according to a target transformation element to obtain a transformed two-dimensional image and transformed two-dimensional truth value annotation data, that an original intrinsic matrix is transformed according to the target transformation element to obtain a transformed intrinsic matrix, that a two-dimensional projection is performed on three-dimensional truth value annotation data according to the transformed intrinsic matrix to obtain projected truth value annotation data, and that three-dimensional augmentation image data is generated according to the transformed two-dimensional image, the transformed two-dimensional truth value annotation data, and the projected truth value annotation data. The diversity of three-dimensional sample data can be improved, thereby improving the accuracy and recall rate of three-dimensional target detection.

Acquire an original two-dimensional image and truth value annotation data matching the original two-dimensional image, where the truth value annotation data includes two-dimensional truth value annotation data and three-dimensional truth value annotation data — S110

Transform the original two-dimensional image and the two-dimensional truth value annotation data according to a target transformation element to obtain a transformed two-dimensional image and transformed two-dimensional truth value annotation data — S120

Transform an original intrinsic matrix according to the target transformation element to obtain a transformed intrinsic matrix — S130

Perform a two-dimensional projection on the three-dimensional truth value annotation data according to the transformed intrinsic matrix to obtain projected truth value annotation data — S140

Generate three-dimensional augmentation image data according to the transformed two-dimensional image, the transformed two-dimensional truth value annotation data, and the projected truth value annotation data — S150

**FIG. 1**

**Description**

TECHNICAL FIELD

The present disclosure relates to the field of data processing technology and, in particular, to fields including deep learning technology and autonomous driving technology.

BACKGROUND

Data augmentation refers to the processing of more representations from original data in the case of not substantially increasing the data. The amount of the original data and the quality of the original data are improved so that the value generated by more data is approached. The principle of data augmentation is to process representations of more data through integrating prior knowledge into the original data. Data augmentation helps count noise in model discrimination data, strengthens the learning of an ontology feature, reduces the overfitting of a model, and improves the generalization ability.

SUMMARY

Embodiments of the present disclosure provide a three-dimensional data augmentation method and apparatus, a model training method and apparatus, a target detection method and apparatus, a device, a storage medium, a computer program product, and an autonomous vehicle, so that three-dimensional sample data can be expanded greatly on the premise of not increasing costs of data collection and data annotation, improving the diversity of the three-dimensional sample data and thereby improving the accuracy and recall rate of three-dimensional target detection.

In a first aspect, embodiments of the present disclosure provide a three-dimensional data augmentation method. The method includes the steps below.

An original two-dimensional image and truth value annotation data matching the original two-dimensional image are acquired. The truth value annotation data includes two-dimensional truth value annotation data and three-dimensional truth value annotation data.

The original two-dimensional image and the two-dimensional truth value annotation data are transformed according to a target transformation element to obtain a transformed two-dimensional image and transformed two-dimensional truth value annotation data.

An original intrinsic matrix is transformed according to the target transformation element to obtain a transformed intrinsic matrix.

A two-dimensional projection is performed on the three-dimensional truth value annotation data according to the transformed intrinsic matrix to obtain projected truth value annotation data.

Three-dimensional augmentation image data is generated according to the transformed two-dimensional image, the transformed two-dimensional truth value annotation data, and the projected truth value annotation data.

In a second aspect, embodiments of the present disclosure provide a model training method. The method includes the steps below.

Target detection sample data is acquired. The target detection sample data includes original image data and three-dimensional augmentation image data obtained by performing data augmentation according to the original image data. The three-dimensional augmentation image data is obtained through any preceding three-dimensional data augmentation method.

A target detection network model is trained according to the target detection sample data.

In a third aspect, embodiments of the present disclosure provide a target detection method. The method includes the steps below.

A to-be-detected image is acquired.

The to-be-detected image is input into a target detection network model to obtain a target detection result of the target detection network model.

The target detection network model is obtained by being trained through the preceding model training method.

In a fourth aspect, embodiments of the present disclosure provide a three-dimensional data augmentation apparatus. The apparatus includes an image data acquisition module, a first transformation module, a second transformation module, a two-dimensional projection module, and a three-dimensional augmentation image data generation module.

The image data acquisition module is configured to acquire an original two-dimensional image and truth value annotation data matching the original two-dimensional image. The truth value annotation data includes two-dimensional truth value annotation data and three-dimensional truth value annotation data.

The first transformation module is configured to transform the original two-dimensional image and the two-dimensional truth value annotation data according to a target transformation element to obtain a transformed two-dimensional image and transformed two-dimensional truth value annotation data.

The second transformation module is configured to transform an original intrinsic matrix according to the target transformation element to obtain a transformed intrinsic matrix.

The two-dimensional projection module is configured to perform a two-dimensional projection on the three-dimensional truth value annotation data according to the transformed intrinsic matrix to obtain projected truth value annotation data.

The three-dimensional augmentation image data generation module is configured to generate three-dimensional augmentation image data according to the transformed two-dimensional image, the transformed two-dimensional truth value annotation data, and the projected truth value annotation data.

In a fifth aspect, embodiments of the present disclosure provide a model training apparatus. The apparatus includes a sample data acquisition module and a model training module.

The sample data acquisition module is configured to acquire target detection sample data. The target detection sample data includes original image data and three-dimensional augmentation image data obtained by performing data augmentation according to the original image data. The three-dimensional augmentation image data is obtained through any preceding three-dimensional data augmentation apparatus.

The model training module is configured to train a target detection network model according to the target detection sample data.

In a sixth aspect, embodiments of the present disclosure provide a target detection apparatus. The apparatus includes a to-be-detected image acquisition module and a target detection result acquisition module.

The to-be-detected image acquisition module is configured to acquire a to-be-detected image.

The target detection result acquisition module is configured to input the to-be-detected image into a target detection network model to obtain a target detection result of the target detection network model.

The target detection network model is obtained by being trained through the preceding model training apparatus.

In a seventh aspect, embodiments of the present disclosure provide an electronic device. The electronic device includes at least one processor and a memory communicatively connected to the at least one processor.

The memory stores instructions executable by the at least one processor. The instructions are executed by the at least one processor to cause the at least one processor to perform the three-dimensional data augmentation method according to embodiments in the first aspect, to perform the model training method according to embodiments in the second aspect, or to perform the target detection method according to embodiments in the third aspect.

In an eighth aspect, embodiments of the present disclosure further provide a non-transitory computer-readable storage medium computer instructions for causing a computer to perform the three-dimensional data augmentation method according to embodiments in the first aspect, to perform the model training method according to embodiments in the second aspect, or to perform the target detection method according to embodiments in the third aspect.

In a ninth aspect, embodiments of the present disclosure further provide a computer program product. The computer program product includes a computer program which, when executed by a processor, causes the processor to perform the three-dimensional data augmentation method according to embodiments in the first aspect, to perform the model training method according to embodiments in the second aspect, or to perform the target detection method according to embodiments in the third aspect.

In a tenth aspect, embodiments of the present disclosure further provide an autonomous vehicle. The autonomous vehicle includes the electronic device provided in the seventh aspect.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image. After the three-dimensional augmentation image data is obtained, the original image data and the three-dimensional augmentation image data may be taken as the target detection sample data to train the target detection network model. Thus, the three-dimensional target detection is performed on the to-be-detected image according to the target detection network model obtained through training so as to obtain the final target detection result. Accordingly, problems in the related art, including a high data annotation cost and difficulty in guaranteeing data diversity when data augmentation processing is performed on the sample data of the three-dimensional target detection, are solved. Moreover, problems, including the low accuracy and recall rate when the three-dimensional target detection is performed on the target detection network model obtained by being trained according to the sample data after data augmentation, are also solved. On the premise of not increasing costs of data collection and data annotation, three-dimensional sample data can be expanded greatly, improving the diversity of the three-dimensional sample data and thereby improving the accuracy and recall rate of the three-dimensional target detection.

It is to be understood that the content described in this part is neither intended to identify key or important features of embodiments of the present disclosure nor intended to limit the scope of the present disclosure. Other features of the present disclosure are apparent from the description provided hereinafter.

BRIEF DESCRIPTION OF DRAWINGS

The drawings are intended to provide a better understanding of the solution and not to limit the present disclosure.

FIG. 1 is a flowchart of a three-dimensional data augmentation method according to an embodiment of the present disclosure.

FIG. 2 is a flowchart of a three-dimensional data augmentation method according to an embodiment of the present disclosure.

FIG. 3 is a flowchart of a three-dimensional data augmentation method according to an embodiment of the present disclosure.

FIG. 4 is a flowchart of a model training method according to an embodiment of the present disclosure.

FIG. 5 is a flowchart of a target detection method according to an embodiment of the present disclosure.

FIG. 6 is a diagram illustrating the structure of a three-dimensional data augmentation apparatus according to an embodiment of the present disclosure.

FIG. 7 is a diagram illustrating the structure of a model training apparatus according to an embodiment of the present disclosure.

FIG. 8 is a diagram illustrating the structure of a target detection apparatus according to an embodiment of the present disclosure.

FIG. 9 is a diagram illustrating the structure of an electronic device for performing a three-dimensional data augmentation method, a model training method, or a target detection method according to an embodiment of the present disclosure.

DETAILED DESCRIPTION

Example embodiments of the present disclosure, including details of embodiments of the present disclosure, are described hereinafter in conjunction with drawings to facilitate understanding. The example embodiments are illustrative only. Therefore, it is to be appreciated by those of ordinary skill in the art that various changes and modifications may be made to the embodiments described herein without departing from the scope and spirit of the present disclosure. Similarly, description of well-known functions and constructions is omitted hereinafter for clarity and conciseness.

Three-dimensional object detection is to recognize a complete three-dimensional object model based on the three-dimensional information of object surface orientation and has been widely used in technical fields of Internet of vehicles, intelligent cockpits, intelligent transportation, and autonomous driving. For example, in the field of autonomous driving, the three-dimensional object detection technology may be used for implementing the 3D (three-dimensional) recognition and detection of an obstacle. In the 3D object detection technology, monocular 3D target detection is an important technology branch. Monocular 3D target detection refers to the technology that a single camera is used for collecting an image so as to estimate 3D attributes of a detection object in the image, including position {x, y, z} (that is, three-dimensional coordinates of the detection object), size {H, W, L} (that is, the height, width and length of the detection object), and orientation {theta}.

Before monocular 3D target detection is performed, it is often necessary to use the image sample data with annotation data to train a target detection network model so as to achieve a goal of the monocular 3D target detection according to the trained target detection network model. However, when the sample data for training is annotated, two-dimensional annotation needs to be performed on the image data of the camera, and annotation also needs to be performed on the 3D truth value data of the detection object. Thus, the actual data annotation process is quite time-consuming, and costs are very high. Moreover, when the annotation data is collected, most of the data indicates relatively repeated scenes. For example, obstacles appearing in many consecutive frames are similar. Therefore, it is difficult to guarantee the diversity of the sample data, thereby reducing the accuracy and recall rate of the target detection network model.

In order to solve the preceding problems, in the related art, a method of simulating the change in a camera parameter, for example, the focal length of the camera, the receptive field of the camera, or the position of the camera, is usually used for changing an intrinsic parameter of the camera or correcting a 3D truth value. In some other methods, an instance-level obstacle is masked through instance segmentation, and 3D data augmentation is performed through pasting. For each preceding three-dimensional data augmentation method, the processing process is relatively complex, and data processing costs are relatively high.

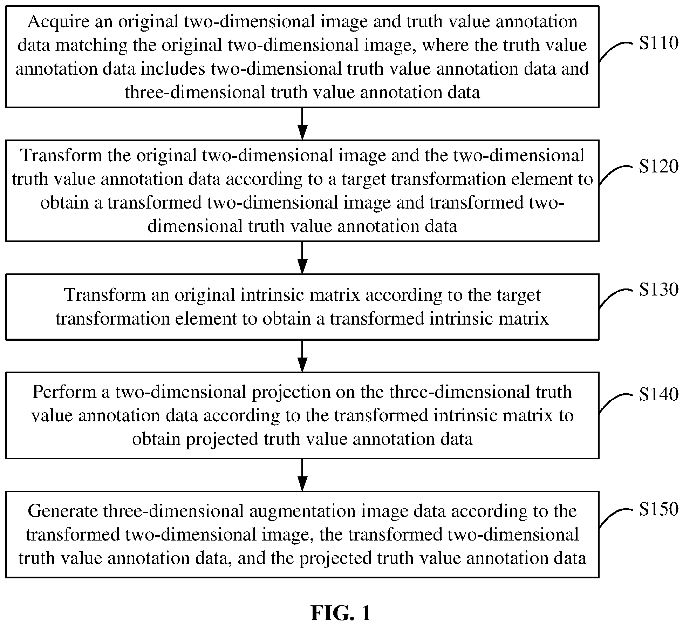

In an example, FIG. 1 is a flowchart of a three-dimensional data augmentation method according to an embodiment of the present disclosure. This embodiment is suitable for the case where diversified three-dimensional sample data is expanded greatly on the premise of not increasing costs of data collection and data annotation. The method may be performed by a three-dimensional data augmentation apparatus which may be implemented by software and/or hardware and may be generally integrated in an electronic device. The electronic device may be a terminal device or a server device. Embodiments of the present disclosure do not limit the specific type of the electronic device. Accordingly, as shown in FIG. 1, the method includes the operations below.

In S 110, an original two-dimensional image and truth value annotation data matching the original two-dimensional image are acquired. The truth value annotation data includes two-dimensional truth value annotation data and three-dimensional truth value annotation data.

The original two-dimensional image may be an originally collected two-dimensional image. The original two-dimensional image may be a two-dimensional image of any type, for example, a red, green and blue (three primary colors, or RGB) image, a grayscale image, or an infrared image as long as it can be used for target detection. Embodiments of the present disclosure do not limit the image type and image content of the original two-dimensional image. The truth value annotation data may be data used for annotating the original two-dimensional image. The two-dimensional truth value annotation data may be data for annotating the two-dimensional information of the original two-dimensional image, for example, the coordinate data of a two-dimensional annotated bounding box (bbox) and the coordinate data of a key point. The three-dimensional truth value annotation data may be data for annotating the three-dimensional information of the original two-dimensional image, for example, the three-dimensional information of an obstacle, including the depth of the obstacle, the length, width and height of the obstacle, and the orientation of the obstacle. Embodiments of the present disclosure do not limit the annotation object and data content of the two-dimensional truth value annotation data and the annotation object and data content of the three-dimensional truth value annotation data. Optionally, the truth value annotation data may be ground truth (GT) data. Correspondingly, the two-dimensional truth value annotation data and the three-dimensional truth value annotation data may be 2D GT data and 3D GT data, respectively.

In embodiments of the present disclosure, before data augmentation processing is performed, original image data including the original two-dimensional image and the truth value annotation data matching the original two-dimensional image may be acquired. The original image data may be acquired through real-time acquisition and annotation or may be acquired by being downloaded and exported from a database storing the original image data. The original image data may be image data collected by a camera of an autonomous vehicle and annotation data obtained by annotating the image data. Alternatively, the original image data may be image data collected by a surveillance camera and annotation data obtained by annotating the image data. Embodiments of the present disclosure do not limit the acquisition manner and data content of the original two-dimensional image and the acquisition method and data content of the truth value annotation data matching the original two-dimensional image.

Optionally, the two-dimensional information of the original two-dimensional image and the three-dimensional information of the original two-dimensional image may be annotated after the original two-dimensional image is acquired, thereby obtaining the two-dimensional truth value annotation data of the original two-dimensional image and the three-dimensional truth value annotation data of the original two-dimensional image.

In S 120, the original two-dimensional image and the two-dimensional truth value annotation data are transformed according to a target transformation element to obtain a transformed two-dimensional image and transformed two-dimensional truth value annotation data.

The target transformation element may be an element for transforming the original image data. Exemplarily, the target transformation element may include, but is not limited to, an affine transformation matrix, a symmetric line of a detection object in the image, or a center point of the detection object in the image. As long as the transformation of the original image data can be implemented, embodiments of the present disclosure do not limit the element type of the target transformation element. The transformed two-dimensional image may be a two-dimensional image obtained by transforming the original two-dimensional image according to the target transformation element. The transformed two-dimensional truth value annotation data may be two-dimensional truth value annotation data obtained by transforming the two-dimensional truth value annotation data according to the target transformation element.

Correspondingly, after the original two-dimensional image and the truth value annotation data matching the original two-dimensional image are acquired, data augmentation processing may be performed on the original two-dimensional image and the truth value annotation data. In the process of the data augmentation processing, the target transformation element for transforming the image and the annotation data needs to be determined first. Then the original two-dimensional image and the two-dimensional truth value annotation data are transformed according to the target transformation element to obtain the transformed two-dimensional image and the transformed two-dimensional truth value annotation data that match the original two-dimensional image and the two-dimensional truth value annotation data.

It is to be understood that when transformed according to the target transformation element, the original two-dimensional image may be transformed from different angles to simulate the shooting of the image from different angles at the same time and implement the expansion of the image data. Correspondingly, after the original two-dimensional image is transformed according to the original two-dimensional image, the two-dimensional truth value annotation data matching the original two-dimensional image needs to be transformed according to the transformation of the same original two-dimensional image to guarantee the consistency and unity of the image data and the annotation data. The transformed two-dimensional image and the transformed two-dimensional truth value annotation data that are obtained are a group of expanded two-dimensional image data.

Optionally, before the original two-dimensional image and the two-dimensional truth value annotation data are transformed according to the target transformation element, it may also be judged whether the data augmentation processing needs to be performed. Optionally, it may be judged through the value of random data whether the data augmentation processing needs to be performed. Alternatively, it may also be judged through the richness of sample data whether the data augmentation processing needs to be performed.

In S 130, an original intrinsic matrix is transformed according to the target transformation element to obtain a transformed intrinsic matrix.

An intrinsic matrix is a matrix for transforming 3D camera coordinates into 2D homogeneous image coordinates. A parameter in the matrix may be composed of a camera-related parameter and coordinates of the center point of a camera image. Correspondingly, the original intrinsic matrix may be a matrix used for transforming 3D camera coordinates of the original two-dimensional image into 2D homogeneous image coordinates. The transformed intrinsic matrix may be a matrix used for transforming 3D camera coordinates of the transformed two-dimensional image into 2D homogeneous image coordinates.

In S 140, a two-dimensional projection is performed on the three-dimensional truth value annotation data according to the transformed intrinsic matrix to obtain projected truth value annotation data.

The projected truth value annotation data may be two-dimensional truth value annotation data obtained after the two-dimensional projection is performed on the three-dimensional truth value annotation data on which the two-dimensional projection needs to be performed. The two-dimensional projection is to transform 3D camera coordinates into 2D homogeneous image coordinates.

After the original two-dimensional image and the two-dimensional truth value annotation data are transformed according to the determined target transformation element to obtain the transformed two-dimensional image and the transformed two-dimensional truth value annotation data, the original intrinsic matrix may be further transformed according to the same target transformation element to obtain the transformed intrinsic matrix. Moreover, the two-dimensional projection is performed on the three-dimensional truth value annotation data according to the transformed intrinsic matrix to obtain the projected truth value annotation data.

It is to be understood that part of the three-dimensional truth value annotation data matching the original two-dimensional image does not require the two-dimensional projection. For example, when the image is transformed, if the depth information of the detection object in the image and the size information of the detection object in the image do not change, three-dimensional truth value annotation data including depth data and size data does not require the two-dimensional projection. However, the orientation data of the detection object needs to be transformed correspondingly. Accordingly, optionally, when the two-dimensional projection is performed on the three-dimensional truth value annotation data according to the transformed intrinsic matrix, it is feasible to select part of the dimensional truth value annotation data that needs to be projected to the 2D image and perform the two-dimensional projection on the selected part of the dimensional truth value annotation data.

In S150, three-dimensional augmentation image data is generated according to the transformed two-dimensional image, the transformed two-dimensional truth value annotation data, and the projected truth value annotation data.

The three-dimensional augmentation image data is also expanded data obtained by performing the data augmentation processing on the basis of the original two-dimensional image and the truth value annotation data matching the original two-dimensional image.

In embodiments of the present disclosure, the transformed two-dimensional image and the transformed two-dimensional truth value annotation data are obtained by transforming the original two-dimensional image and two-dimensional truth value annotation data of a group of original image data according to the target transformation element. Moreover, the two-dimensional projection is performed on the three-dimensional truth value annotation data of the group of original image data. After the projected truth value annotation data is obtained, the three-dimensional augmentation image data corresponding to the expansion of the group of original image data is generated according to the transformed two-dimensional image, the transformed two-dimensional truth value annotation data, and the projected truth value annotation data that are obtained after the group of original image data is transformed.

It is to be understood that a group of original image data may be expanded correspondingly with multiple groups of different three-dimensional augmentation image data according to different types of target transformation elements. Accordingly, in the three-dimensional data augmentation method according to embodiments of the present disclosure, on the premise of no manual annotation, target transformation elements may be used for expanding the original image data with a great amount of three-dimensional augmentation image data. Different target transformation elements correspond to different three-dimensional augmentation image data obtained through expansions, thereby greatly improving the diversity of three-dimensional augmentation image data.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image, solving problems in the related art including a high data annotation cost and difficulty in guaranteeing data diversity when data augmentation processing is performed on the sample data of three-dimensional target detection. On the premise of not increasing costs of data collection and data annotation, three-dimensional sample data can be expanded greatly, improving the diversity of the three-dimensional sample data.

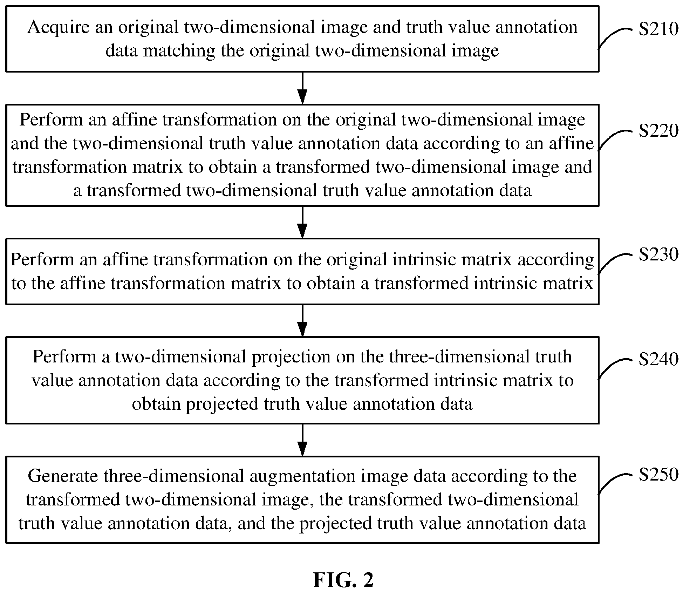

In an example, FIG. 2 is a flowchart of a three-dimensional data augmentation method according to an embodiment of the present disclosure. Based on the technical solutions of each preceding embodiment, embodiments of the present disclosure are optimized and improved, providing various optional implementations in which an original two-dimensional image, two-dimensional truth annotation data, and an original intrinsic matrix are transformed according to an affine transformation matrix.

The three-dimensional data augmentation method shown in FIG. 2 includes the steps below.

In S210, an original two-dimensional image and truth value annotation data matching the original two-dimensional image are acquired.

The truth value annotation data includes two-dimensional truth value annotation data and three-dimensional truth value annotation data.

In S220, an affine transformation is performed on the original two-dimensional image and the two-dimensional truth value annotation data according to an affine transformation matrix to obtain a transformed two-dimensional image and a transformed two-dimensional truth value annotation data.

In embodiments of the present disclosure, optionally, the affine transformation may be performed on the original two-dimensional image and the two-dimensional truth value annotation data by taking the affine transformation matrix as a target transformation element to obtain the corresponding transformed two-dimensional image and the corresponding transformed two-dimensional truth value annotation data.

In S230, an affine transformation is performed on the original intrinsic matrix according to the affine transformation matrix to obtain a transformed intrinsic matrix.

Correspondingly, after the affine transformation is performed on the original two-dimensional image and the two-dimensional truth value annotation data according to the affine transformation matrix, the affine transformation may be performed on the original intrinsic matrix by using the same affine transformation matrix to obtain the transformed intrinsic matrix, guaranteeing the consistency of transformation operations.

It is to be understood that an affine transformation is a linear transformation from two-dimensional coordinates to two-dimensional coordinates and maintains the "straightness" (that is, after being transformed, a straight line is still a straight line) and "parallelism" (that is, the relative position relationship between two-dimensional graphs remains unchanged, parallel lines are still parallel lines, and the position sequence of points on a straight line remains unchanged) of a two-dimensional graph. Since multiple different affine transformation matrices may be used for transforming original image data, a large amount of transformed image data may be obtained, thereby greatly improving the data size of sample data.

In an optional embodiment of the present disclosure, the affine transformation matrix includes at least one of the following: a scaling transformation matrix, a translation transformation matrix, a rotation transformation matrix, a horizontal shear matrix, a vertical shear matrix, a reflection matrix relative to an original point, a horizontal reflection matrix, or a vertical reflection matrix.

The scaling transformation matrix may be used for performing a scaling transformation on the original image data. The translation transformation matrix may be used for performing a translation transformation on the original image data. The rotation transformation matrix may be used for performing a rotation transformation on the original image data. The horizontal shear matrix may be used for performing a shear transformation in the horizontal direction, that is, in the x-axis direction, on the original image data. The vertical shear matrix may be used for performing a shear transformation in the vertical direction, that is, in the y-axis direction, on the original image data. The reflection matrix relative to the original point may be used for performing a reflection transformation over a coordinate origin on the original image data. The horizontal reflection matrix may be used for performing a reflection transformation in the horizontal direction, that is, in the x-axis direction, on the original image data. The vertical reflection matrix may be used for performing a reflection transformation in the vertical direction, that is, in the y-axis direction, on the original image data.

It is assumed that A denotes the affine transformation matrix. Then the general expression of matrix A is

$$\begin{bmatrix} a & b & c \\ d & e & f \\ 0 & 0 & 1 \end{bmatrix}$$

. a, b, c, d, e, and f are parameters of matrix A. According to different types of the affine transformation matrix, parameter values of the preceding matrix A are also different. In an embodiment, when the affine transformation matrix is a scaling transformation matrix, the expression of matrix A may be

$$\begin{bmatrix} w & 0 & 0 \\ 0 & h & 0 \\ 0 & 0 & 1 \end{bmatrix}$$

. w and h denote the scale in the x-axis direction and the scale in the y-axis direction, respectively. When the affine transformation matrix is a rotation transformation matrix, the expression of matrix A may be

$$\begin{bmatrix} 1 & 0 & X_\Delta \\ 0 & 1 & Y_\Delta \\ 0 & 0 & 1 \end{bmatrix}$$

. $X_\Delta$ and $Y_\Delta$ denote the translation distance in the x-axis direction and the translation distance in the y-axis direction respectively. When the affine transformation matrix is a translation transformation matrix, the expression of matrix A may be

$$\begin{bmatrix} \cos\theta & \sin\theta & 0 \\ -\sin\theta & \cos\theta & 0 \\ 0 & 0 & 1 \end{bmatrix}$$

. θ denotes the angle of rotation along the y axis. When the affine transformation matrix is a horizontal shear matrix, the expression of matrix A may be

$$\begin{bmatrix} 1 & \tan\varphi & 0 \\ 0 & 1 & 0 \\ 0 & 0 & 1 \end{bmatrix}$$

. φ denotes the angle of shearing along the y axis. When the affine transformation matrix is a vertical shear matrix, the expression of matrix A may be

$$\begin{bmatrix} 1 & 0 & 0 \\ \tan\gamma & 1 & 0 \\ 0 & 0 & 1 \end{bmatrix}$$

. γ denotes the angle of shearing along the x axis. When the affine transformation matrix is a reflection matrix relative to the original point, the expression of matrix A may be

$$\begin{bmatrix} -1 & 0 & 0 \\ 0 & -1 & 0 \\ 0 & 0 & 1 \end{bmatrix}$$

. When the affine transformation matrix is a horizontal reflection matrix, the expression of matrix A may be

$$\begin{bmatrix} 1 & 0 & 0 \\ 0 & -1 & 0 \\ 0 & 0 & 1 \end{bmatrix}$$

. When the affine transformation matrix is a vertical reflection matrix, the expression of matrix A may be

$$\begin{bmatrix} -1 & 0 & 0 \\ 0 & 1 & 0 \\ 0 & 0 & 1 \end{bmatrix}$$

.

In an embodiment, when the affine transformation is performed on the original two-dimensional image and the two-dimensional truth value annotation data according to the affine transformation matrix, the original two-dimensional image and the two-dimensional truth value annotation data may be transformed into matching matrix forms. Exemplarily, matrix B of the original two-dimensional image may be

$$\begin{bmatrix} \text{coordinates of pixel 11} & \cdots & \text{coordinates of pixel 1n} \\ \vdots & \ddots & \vdots \\ \text{coordinates of pixel n1} & \cdots & \text{coordinates of pixel nn} \end{bmatrix}$$

. Coordinates of pixel 11 represent coordinates of a pixel in row 1 and column 1. Coordinates of pixel 1n represent coordinates of a pixel in row 1 and column n. Coordinates of pixel n1 represent coordinates of a pixel in row n and column 1. Coordinates of pixel nn represent coordinates of a pixel in row n and column n. An example of the coordinates of pixel 11 is taken for description. The expression of the coordinates of pixel 11 may be $(x11, y11, 1)$. Matrix C of the two-dimensional truth value annotation data may be $[xb\ yb\ 1]$. $xb$ and $yb$ denote the abscissa of the two-dimensional truth value annotation data and the ordinate of the two-dimensional truth value annotation data respectively. Correspondingly, the affine transformation may be performed on the original two-dimensional image based on an expression of $A \cdot B$. Moreover, the affine transformation may be performed on the two-dimensional truth value annotation data based on an expression of $A \cdot C$.

It is assumed that K denotes the original intrinsic matrix. Then the general expression of matrix K is

$$\begin{bmatrix} f_x & 0 & c_x \\ 0 & f_y & c_y \\ 0 & 0 & 1 \end{bmatrix}$$

. $f_x$ and $f_y$ denote the focal length of a camera in direction x and the focal length of the camera in direction y respectively. $f_x$ is approximately equal to $f_y$. $c_x$ and $c_y$ denote the abscissa of an image center point and the ordinate of the image center point respectively.

Corresponding, when the original intrinsic matrix is transformed according to the affine transformation matrix, the affine transformation may be performed on the original two-dimensional image based on an expression of $A \cdot K$ to obtain transformed intrinsic matrix K'. That is, $K' = A \cdot K$. In an embodiment, the matrix form of K' is

$$\begin{bmatrix} a{\cdot}f_x & b{\cdot}f_y & a \cdot c_x + b{\cdot}f_y + c \\ d{\cdot}f_x & e{\cdot}f_y & d \cdot c_x + e{\cdot}c_y + f \\ 0 & 0 & 1 \end{bmatrix}$$

.

Exemplarily, an example in which the vertical reflection matrix serves as the target transformation element is taken for description. K' obtained by transforming the original intrinsic matrix according to the vertical reflection matrix

is $$\begin{bmatrix} -f_x & 0 & -c_x \\ 0 & f_y & c_y \\ 0 & 0 & 1 \end{bmatrix}$$ .

In S240, a two-dimensional projection is performed on the three-dimensional truth value annotation data according to the transformed intrinsic matrix to obtain projected truth value annotation data.

If the two-dimensional projection is performed on the original two-dimensional image, a projection transformation from a three-dimensional point in the original two-dimensional image to a two-dimensional point can be implemented based on an expression that $E = K \cdot D$. E denotes coordinates of the two-dimensional point projected by the three-dimensional point and may be $(x_e, y_e, 1)$. $x_e$ and $y_e$ may be the abscissa of the two-dimensional point projected by the three-dimensional point and the ordinate of the two-dimensional point projected by the three-dimensional point respectively. D denotes coordinates of the three-dimensional point and may be $(X, Y, Z)$.

Correspondingly, the two-dimensional projection is performed on the three-dimensional truth value annotation data according to the transformed intrinsic matrix. Then a projection transformation from a three-dimensional point in the transformed two-dimensional image to a two-dimensional point may be implemented based on an expression that $E' = K' \cdot D$.

In S250, three-dimensional augmentation image data is generated according to the transformed two-dimensional image, the transformed two-dimensional truth value annotation data, and the projected truth value annotation data.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image, solving problems in the related art including a high data annotation cost and difficulty in guaranteeing data diversity when data augmentation processing is performed on the sample data of three-dimensional target detection. On the premise of not increasing costs of data collection and data annotation, three-dimensional sample data can be expanded greatly, improving the diversity of the three-dimensional sample data.

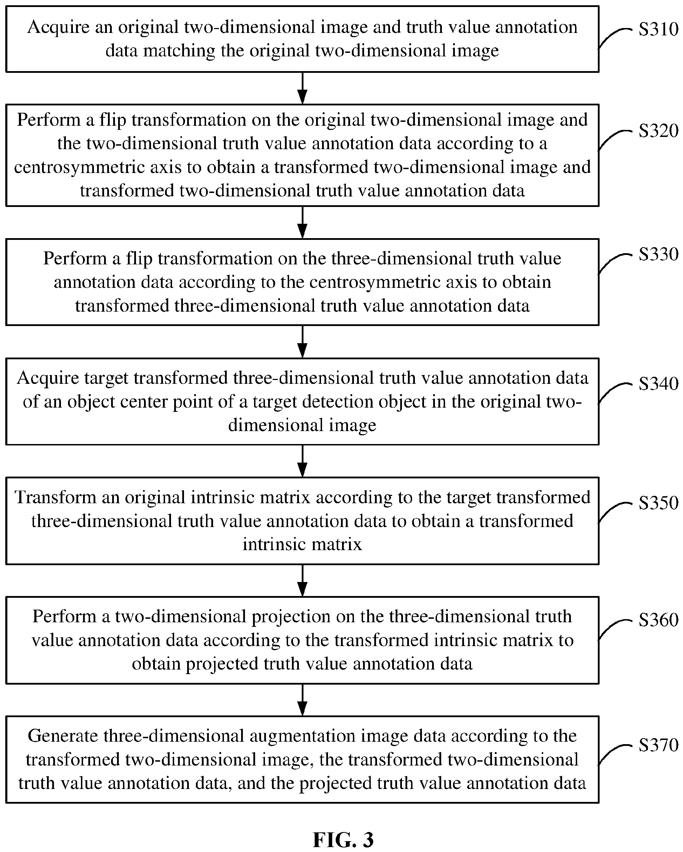

In an example, FIG. 3 is a flowchart of a three-dimensional data augmentation method according to an embodiment of the present disclosure. Based on the technical solutions of each preceding embodiment, embodiments of the present disclosure are optimized and improved, providing various optional implementations in which an original two-dimensional image, two-dimensional truth annotation data, and an original intrinsic matrix are transformed according to a centrosymmetric axis.

The three-dimensional data enhancement method shown in FIG. 3 includes the steps below.

In S310, an original two-dimensional image and truth value annotation data matching the original two-dimensional image are acquired.

The truth value annotation data includes two-dimensional truth value annotation data and three-dimensional truth value annotation data.

In S320, a flip transformation is performed on the original two-dimensional image and the two-dimensional truth value annotation data according to a centrosymmetric axis to obtain a transformed two-dimensional image and transformed two-dimensional truth value annotation data.

The centrosymmetric axis may be a vertical line where an image center point is located.

In addition to using an affine transformation matrix for implementing augmentation processing on two-dimensional image data, a 3D flip may also be used for implementing augmentation processing on the two-dimensional image data. The augmentation processing manner of the 3D flip is similar to performing a mirror flip on the two-dimensional image data.

In S330, a flip transformation is performed on the three-dimensional truth value annotation data according to the centrosymmetric axis to obtain transformed three-dimensional truth value annotation data.

The transformed three-dimensional truth value annotation data may be three-dimensional truth value annotation data obtained by transforming the three-dimensional truth value annotation data according to the centrosymmetric axis.

In an embodiment, the centrosymmetric axis of the original two-dimensional image may be taken as a benchmark. The flip transformation is performed on the original two-dimensional image and the two-dimensional truth value annotation data according to the centrosymmetric axis to obtain the transformed two-dimensional image and the transformed two-dimensional truth value annotation data. On this basis, the flip transformation also needs to be performed on the three-dimensional truth value annotation data according to the centrosymmetric axis to obtain the transformed three-dimensional truth value annotation data.

Exemplarily, it is assumed that coordinates of a piece of two-dimensional truth value annotation data in an original two-dimensional image are $(x, y)$, that coordinates of a piece of three-dimensional truth value annotation data in the original two-dimensional image are $(X, Y, Z)$, and that $w0$ and $h0$ denote the width and the height of the original two-dimensional image respectively. Then coordinates of transformed two-dimensional truth value annotation data obtained by performing a flip transformation on the two-dimensional truth value annotation data according to a centrosymmetric axis are $(w0 - x, h0 - y)$. Coordinates of transformed three-dimensional truth value annotation data obtained by performing a flip transformation on the three-dimensional truth value annotation data according to the centrosymmetric axis are $(- X, Y, Z)$.

In S340, target transformed three-dimensional truth value annotation data of an object center point of a target detection object in the original two-dimensional image is acquired.

The target detection object is an object needing to be detected and recognized in the original two-dimensional image. The target detection object may be a detection object of any type, for example, an obstacle. Embodiments of the present disclosure do not limit the type of the target detection object. The object center point may be a center point of the target detection object. The target transformed three-dimensional truth value annotation data may be transformed three-dimensional truth value annotation data obtained after the flip transformation is performed on the three-dimensional truth value annotation data of the object center point of the target detection object in the original two-dimensional image.

In S350, an original intrinsic matrix is transformed according to the target transformed three-dimensional truth value annotation data to obtain a transformed intrinsic matrix.

In embodiments of the present disclosure, when the original intrinsic matrix is transformed according to the centrosymmetric axis, the target transformed three-dimensional truth value annotation data of the object center point of the target detection object in the original two-dimensional image needs to be taken as a benchmark. The original intrinsic matrix is transformed on the basis of the target transformed three-dimensional truth value annotation data of the object center point of the target detection object so as to obtain the transformed intrinsic matrix.

In the preceding technical solutions, the arrangement in which flip transformations are performed on original image data by using the centrosymmetric axis enriches processing manners of data augmentation, obtaining a large amount of transformed image data and thereby greatly improving the data size of sample data.

In an optional embodiment of the present disclosure, the step in which the original intrinsic matrix is transformed according to the target transformed three-dimensional truth value annotation data to obtain the transformed intrinsic matrix may include that the original intrinsic matrix is transformed into a transformation equation set according to the target transformed three-dimensional truth value annotation data, that a target matrix equation is constructed according to the transformation equation set and a transformed matrix parameter of the transformed intrinsic matrix, that the target matrix equation is solved to obtain a solution result of the target matrix equation, and that the transformed intrinsic matrix is generated according to the solution result of the target matrix equation.

The transformation equation set may be an equation set constructed according to a matrix parameter of the original intrinsic matrix. The transformed matrix parameter is a parameter of the transformed intrinsic matrix. The target matrix equation may be a matrix equation constructed according to the transformed matrix parameter of the transformed intrinsic matrix on the basis of the transformation equation set and is used for solving the matrix parameter of the transformed intrinsic matrix. The solution result of the target matrix equation is a solution result of an unknown parameter in the target matrix equation.

In an embodiment, to determine the transformed intrinsic matrix used for the flip transformations, the original intrinsic matrix is first transformed into the transformation equation set according to the target transformed three-dimensional truth value annotation data. Further, the matrix parameter of the original intrinsic matrix in the transformation equation set is replaced by the transformed matrix parameter of the transformed intrinsic matrix according to a parameter correspondence between the original intrinsic matrix and the transformed intrinsic matrix . As a result, the target matrix equation constructed by the transformed matrix parameter of the transformed intrinsic matrix is obtained. Further, the constructed target matrix equation may be solved to obtain the solution result of the target matrix equation. The solution result of the target matrix equation is also a solution result of the transformed matrix parameter of the transformed intrinsic matrix; therefore, the transformed intrinsic matrix may be generated directly according to the obtained solution result of the target matrix equation.

In the preceding technical solutions, the transformed matrix parameter of the transformed intrinsic matrix is introduced into the matrix equation in the manner of constructing the equation set so that the transformed matrix parameter of the transformed intrinsic matrix is solved rapidly by using the process of data derivation.

In an optional embodiment of the present disclosure, the step in which the original intrinsic matrix is transformed into the transformation equation set according to the target transformed three-dimensional truth value annotation data may include that target normalization projection coordinates of the object center point of the target detection object in the original two-dimensional image are acquired according to the target transformed three-dimensional truth value annotation data and the original intrinsic matrix and that the original intrinsic matrix is transformed into the transformation equation set according to the target normalization projection coordinates and the target transformed three-dimensional truth value annotation data.

The target normalization projection coordinates are also normalization projection coordinates of the object center point of the target detection object in a two-dimensional image.

In an embodiment, it is assumed that the three-dimensional truth value annotation data of the object center point of the target detection object is $(X_0, Y_0, Z_0)$. Then the target transformed three-dimensional truth value annotation data is $(- X_0, Y_0, Z_0)$ and is a known quantity. The original intrinsic matrix is $\begin{bmatrix} f_x & 0 & c_x \\ 0 & f_y & c_y \\ 0 & 0 & 1 \end{bmatrix}$. Since $f_x \approx f_y$, the original intrinsic matrix may be approximately represented as $\begin{bmatrix} f & 0 & c_x \\ 0 & f & c_y \\ 0 & 0 & 1 \end{bmatrix}$. Accordingly, an original formula that

$$\frac{1}{Z_0} \begin{bmatrix} f & 0 & c_x \\ 0 & f & c_y \\ 0 & 0 & 1 \end{bmatrix} \cdot \begin{bmatrix} -X_0 \\ Y_0 \\ Z_0 \end{bmatrix} = \begin{bmatrix} u \\ v \\ 1 \end{bmatrix}$$

may be constructed according to the target transformed three-dimensional truth value annotation data and the original intrinsic matrix, u and v are two unknown quantities and are the target normalization projection coordinates of the object center point of the target detection object in the original two-dimensional image. The preceding original formula is deformed to obtain the transformation equation set that $\begin{cases} -fX_0+c_x\cdot Z_0-uZ_0=0 \\ fY_0+c_y\cdot Z_0-vZ_0=0 \end{cases}$ .
The construction of the transformation equation set may effectively express the original intrinsic matrix in the form of an equation set, facilitating the subsequent derivation and solution of the transformed matrix parameter of the transformed intrinsic matrix.

In an optional embodiment of the present disclosure, the step in which the target matrix equation is constructed according to the transformation equation set and the transformed matrix parameter of the transformed intrinsic matrix may include that a target equation set is constructed according to the transformation equation set and the transformed matrix parameter of the transformed intrinsic matrix, that a benchmark matrix equation is constructed according to the target equation set, and that matrix elements of the benchmark matrix equation are expanded according to the transformed three-dimensional truth value annotation data to obtain the target matrix equation.

The target equation set may be an equation set further transformed by the transformation equation set. The benchmark matrix equation may be a matrix equation transformed from the target equation set.

It is to be understood that the flip transformations also transform the original intrinsic matrix into the transformed intrinsic matrix. Accordingly, the transformed intrinsic matrix needs to be used in the preceding original formula for solving the target normalization projection coordinates of the object center point of the target detection object in the original two-dimensional image. Correspondingly, the matrix parameter of the original intrinsic matrix in the transformation equation set is replaced with the transformed matrix parameter of the transformed intrinsic matrix to obtain the corresponding target equation set that $\begin{cases} -f'X_0+c_x'\cdot Z_0-uZ_0=0 \\ f'Y_0+c_y'\cdot Z_0-vZ_0=0 \end{cases}$ . f', $c_x'$, and $c_y$ are each a transformed matrix parameter. That is, the transformed intrinsic matrix is $\begin{bmatrix} f' & 0 & c_x' \\ 0 & f' & c_y' \\ 0 & 0 & 1 \end{bmatrix}$ . Further, the target equation set may be abstracted as that Px - b = 0. P is the coefficient of an unknown quantity in a matrix form. B is a constant term. That Px - b = 0 may be further transformed into a matrix equation that $\begin{bmatrix} -X_0 & Z_0 & 0 \\ Y_0 & 0 & Z_0 \end{bmatrix}\begin{bmatrix} f' \\ c_x' \\ c_y' \\ 1 \end{bmatrix}=\begin{bmatrix} uZ_0 \\ vZ_0 \end{bmatrix}$ . $P=\begin{bmatrix} -X_0 & Z_0 & 0 \\ Y_0 & 0 & Z_0 \end{bmatrix}$ . $x=\begin{bmatrix} f' \\ c_x' \\ c_y' \\ 1 \end{bmatrix}$ .

. The matrix equation may be further transformed. The related value of b is shifted to the left to obtain the benchmark

matrix equation that $\begin{bmatrix} -X_0 & Z_0 & 0 & -uZ_0 \\ Y_0 & 0 & Z_0 & -vZ_0 \end{bmatrix}\begin{bmatrix} f' \\ c_x' \\ c_y' \\ 1 \end{bmatrix}=\begin{bmatrix} 0 \\ 0 \\ 0 \\ 0 \end{bmatrix}$ . P is updated as

$\begin{bmatrix} -X_0 & Z_0 & 0 & -uZ_0 \\ Y_0 & 0 & Z_0 & -vZ_0 \end{bmatrix}$ .

Multiple unknown numbers exist in the benchmark matrix equation, including the target normalization projection coordinates and the transformed matrix parameter of the transformed intrinsic matrix. Accordingly, the benchmark matrix equation needs to be expanded and dimensions of the benchmark matrix equation need to be improved so that the unknown numbers in the benchmark matrix equation can be solved. In this case, multiple groups of known quantities may be selected from the known transformed three-dimensional truth value annotation data to expand the matrix elements of the benchmark matrix equation. Optionally, to achieve a better solution effect, eight groups of known transformed three-dimensional truth value annotation data may be selected to expand the matrix elements of the benchmark matrix

$$\begin{bmatrix} -X_0 & Z_0 & 0 & -uZ_0 \\ Y_0 & 0 & Z_0 & -vZ_0 \\ -X_1 & Z_1 & 0 & -uZ_1 \\ Y_1 & 0 & Z_1 & -vZ_1 \\ & & \cdot & \\ & & \cdot & \\ & & \cdot & \end{bmatrix} \begin{bmatrix} f' \\ c_x' \\ c_y' \\ 1 \end{bmatrix} = \begin{bmatrix} 0 \\ 0 \\ 0 \\ 0 \\ 0 \\ \cdot \\ \cdot \\ \cdot \end{bmatrix}$$

equation so as to obtain the final target matrix equation that $(-X_1, Y_1, Z_1)$ denotes a group of known transformed three-dimensional truth value annotation data.

In the preceding technical solutions, the matrix elements of the benchmark matrix equation constructed by the target equation set are expanded by using multiple groups of three-dimensional truth value annotation data, guaranteeing that the target matrix equation can be solved effectively. Thus, the solution efficiency of the target matrix equation is improved.

In an optional embodiment of the present disclosure, the step in which the target matrix equation is solved to obtain the solution result of the target matrix equation may include that a target least-squares solution method is determined and that the target matrix equation is solved according to the target least-squares solution method to obtain the solution result of the target matrix equation.

The target least-squares solution method may be any least-squares solution method.

In embodiments of the present disclosure, one least-squares solution method may be taken as the target least-squares solution method to solve the target matrix equation and obtain the solution result of the target matrix equation.

$$\begin{bmatrix} -X_0 & Z_0 & 0 & -uZ_0 \\ Y_0 & 0 & Z_0 & -vZ_0 \\ -X_1 & Z_1 & 0 & -uZ_1 \\ Y_1 & 0 & Z_1 & -vZ_1 \\ & & \cdot & \\ & & \cdot & \\ & & \cdot & \end{bmatrix} \begin{bmatrix} f' \\ c_x' \\ c_y' \\ 1 \end{bmatrix} = \begin{bmatrix} 0 \\ 0 \\ 0 \\ 0 \\ 0 \\ \cdot \\ \cdot \\ \cdot \end{bmatrix}$$

Exemplarily, for the target matrix equation that , a least-squares

solution may be performed in the manner of singular value decomposition (SVD) so that the final solution result of $\begin{bmatrix} f' \\ c_x' \\ c_y' \\ 1 \end{bmatrix}$

is obtained. Further, the transformed intrinsic matrix of $\begin{bmatrix} f' & 0 & c_x' \\ 0 & f' & c_y' \\ 0 & 0 & 1 \end{bmatrix}$ is constructed according to the known $\begin{bmatrix} f' \\ c_x' \\ c_y' \\ 1 \end{bmatrix}$.

In the preceding technical solutions, the least-squares solution method helps solve the transformed matrix parameter of the transformed intrinsic matrix simply and rapidly.

In S360, a two-dimensional projection is performed on the three-dimensional truth value annotation data according to the transformed intrinsic matrix to obtain projected truth value annotation data.

In S370, three-dimensional augmentation image data is generated according to the transformed two-dimensional image, the transformed two-dimensional truth value annotation data, and the projected truth value annotation data.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image, solving problems in the related art including a high data annotation cost and difficulty in guaranteeing data diversity when data augmentation processing is performed on the sample data of three-dimensional target detection. On the premise of not increasing costs of data collection and data annotation, three-dimensional sample data can be expanded greatly, improving the diversity of the three-dimensional sample data.

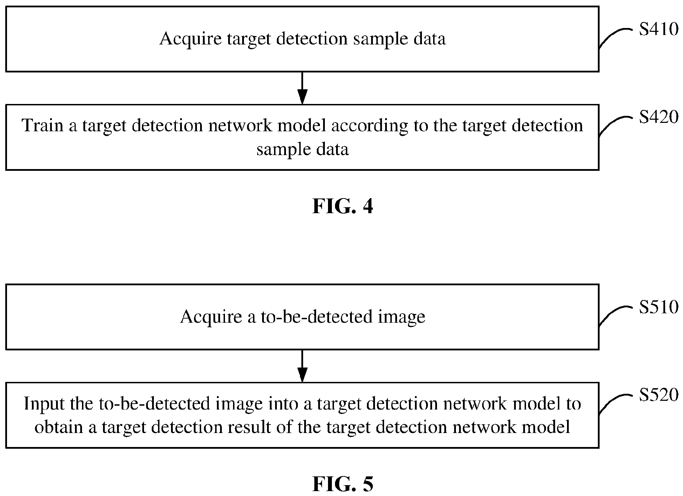

In an example, FIG. 4 is a flowchart of a model training method according to an embodiment of the present disclosure. This embodiment is suitable for the case where a target detection network model is trained by using three-dimension sample data obtained through the preceding data augmentation processing method. The method may be performed by a model training apparatus which may be implemented by software and/or hardware and may be generally integrated in an electronic device. The electronic device may be a terminal device or a server device. Embodiments of the present disclosure do not limit the specific type of the electronic device. Accordingly, as shown in FIG. 4, the method includes the operations below.

In S410, target detection sample data is acquired.

The target detection sample data is sample data used for training a target detection network model. Optionally, the target detection sample data may include original image data and three-dimensional augmentation image data obtained by performing data augmentation according to the original image data. The three-dimensional augmentation image data may be obtained through any preceding three-dimensional data augmentation method.

The original image data may be data without data augmentation processing, for example, an original two-dimensional image and truth value annotation data matching the original two-dimensional image.

In S420, a target detection network model is trained according to the target detection sample data.

The target detection network model may be used for performing three-dimensional target detection according to an acquired image and may be used for detecting a detection object of any type, for example, a three-dimensional obstacle or a tracked object. Optionally, the target detection network model may be a network model of any type that is obtained by deep learning, for example, a convolutional neural network model. Embodiments of the present disclosure do not limit the model type of the target detection network model.

In embodiments of the present disclosure, after the original image data is acquired, data augmentation processing may be performed on the original two-dimensional image in the original image data and the truth value annotation data matching the original two-dimensional image by using any preceding three-dimensional data augmentation method so as to obtain the expanded three-dimensional augmentation image data. The three-dimensional augmentation image data may include a transformed two-dimensional image, transformed two-dimensional truth value annotation data matching the transformed two-dimensional image, and transformed three-dimensional truth value annotation data matching the transformed two-dimensional image. Correspondingly, after the three-dimensional augmentation image data is obtained, both the original image data and the three-dimensional augmentation image data obtained by performing data augmentation according to the original image data are taken as the target detection sample data. Moreover, the target detection sample data is input into the target detection network model to train the target detection network model.

Since the three-dimensional augmentation image data implements a great expansion of the original image data with larger data size and better data diversity, training requirements of the target detection network model can be met, thereby guaranteeing the accuracy and recall rate of the target detection network model.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image. After the three-dimensional augmentation image data is obtained, the original image data and the three-dimensional augmentation image data may be taken as the target detection sample data to train the target detection network model. Thus, the three-dimensional target detection is performed on a to-be-detected image according to the target detection network model obtained through training so as to obtain a final target detection result, solving problems in the related art including the low accuracy and recall rate when the three-dimensional target detection is performed on the target detection network model obtained by being trained according to the sample data after data augmentation. On the premise of not increasing costs of data collection and data annotation, three-dimensional sample data can be expanded greatly, improving the diversity of the three-dimensional sample data and thereby improving the accuracy and recall rate of the three-dimensional target detection.

In an example, FIG. 5 is a flowchart of a target detection method according to an embodiment of the present disclosure. This embodiment is suitable for the case where three-dimensional target detection is performed by using the target detection network model obtained by being trained through the preceding model training method. The method may be performed by a target detection apparatus which may be implemented by software and/or hardware and may be generally integrated in an electronic device. The electronic device may be a terminal device or a server device. Embodiments of the present disclosure do not limit the specific type of the electronic device. Accordingly, as shown in FIG. 5, the method includes the operations below.

In S510, a to-be-detected image is acquired.

The to-be-detected image may be an image on which the three-dimensional target detection needs to be performed.

In S520, the to-be-detected image is input into a target detection network model to obtain a target detection result of the target detection network model.

The target detection network model is obtained by being trained through the preceding model training method.

In embodiments of the present disclosure, after the training on the target detection network model is completed, the to-be-detected image on which the three-dimensional target detection needs to be performed is acquired. Moreover, the to-be-detected image is input into the target detection network model. The automatic detection on the to-be-detected image is implemented through the target detection result output by the target detection network model.

The sample data for training the target detection network model uses original image data and three-dimensional augmentation image data obtained by performing data augmentation according to the original image data. The three-dimensional augmentation image data implements a great expansion of the original image data with larger data size and better data diversity. Accordingly, training requirements of the target detection network model can be met, thereby guaranteeing the accuracy and recall rate of the target detection network model.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image. After the three-dimensional augmentation image data is obtained, the original image data and the three-dimensional augmentation image data may be taken as the target detection sample data to train the target detection network model. Thus, the three-dimensional target detection is performed on the to-be-detected image according to the target detection network model obtained through training so as to obtain the final target detection result. Accordingly, problems in the related art, including a high data annotation cost and difficulty in guaranteeing data diversity when data augmentation processing is performed on the sample data of the three-dimensional target detection, are solved. Moreover, problems, including the low accuracy and recall rate when the three-dimensional target detection is performed on the target detection network model obtained by being trained according to the sample data after data augmentation, are also solved. On the premise of not increasing costs of data collection and data annotation, three-dimensional sample data can be expanded greatly, improving the diversity of the three-dimensional sample data and thereby improving the accuracy and recall rate of the three-dimensional target detection.

It is to be noted that any arrangement and combination of various technical features in the preceding embodiments are also within the scope of the present disclosure.

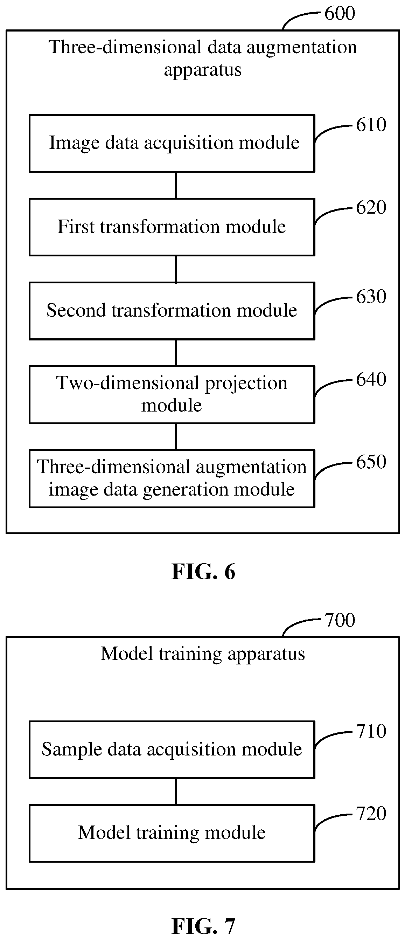

In an example, FIG. 6 is a diagram illustrating the structure of a three-dimensional data augmentation apparatus according to an embodiment of the present disclosure. This embodiment is suitable for the case where diversified three-dimensional sample data is expanded greatly on the premise of not increasing costs of data collection and data annotation. The apparatus may be implemented by software and/or hardware and may be integrated in an electronic device. The electronic device may be a terminal device or a server device. Embodiments of the present disclosure do not limit the specific type of the electronic device.

The three-dimensional data augmentation apparatus 600 shown in FIG. 6 includes an image data acquisition module 610, a first transformation module 620, a second transformation module 630, a two-dimensional projection module 640, and a three-dimensional augmentation image data generation module 650.

The image data acquisition module 610 is configured to acquire an original two-dimensional image and truth value annotation data matching the original two-dimensional image. The truth value annotation data includes two-dimensional truth value annotation data and three-dimensional truth value annotation data.

The first transformation module 620 is configured to transform the original two-dimensional image and the two-dimensional truth value annotation data according to a target transformation element to obtain a transformed two-dimensional image and transformed two-dimensional truth value annotation data.

The second transformation module 630 is configured to transform an original intrinsic matrix according to the target transformation element to obtain a transformed intrinsic matrix.

The two-dimensional projection module 640 is configured to perform a two-dimensional projection on the three-dimensional truth value annotation data according to the transformed intrinsic matrix to obtain projected truth value annotation data.

The three-dimensional augmentation image data generation module 650 is configured to generate three-dimensional augmentation image data according to the transformed two-dimensional image, the transformed two-dimensional truth value annotation data, and the projected truth value annotation data.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image, solving problems in the related art including a high data annotation cost and difficulty in guaranteeing data diversity when data augmentation processing is performed on the sample data of three-dimensional target detection. On the premise of not increasing costs of data collection and data annotation, three-dimensional sample data can be expanded greatly, improving the diversity of the three-dimensional sample data.

Optionally, the target transformation element includes an affine transformation matrix. The first transformation module 620 is configured to perform an affine transformation on the original two-dimensional image and the two-dimensional truth value annotation data according to the affine transformation matrix to obtain the transformed two-dimensional image and the transformed two-dimensional truth value annotation data. The second transformation module 630 is configured to perform an affine transformation on the original intrinsic matrix according to the affine transformation matrix to obtain the transformed intrinsic matrix.

Optionally, the affine transformation matrix includes at least one of the following: a scaling transformation matrix, a translation transformation matrix, a rotation transformation matrix, a horizontal shear matrix, a vertical shear matrix, a reflection matrix relative to an original point, a horizontal reflection matrix, or a vertical reflection matrix.

Optionally, the target transformation element includes a centrosymmetric axis. The first transformation module 620 is configured to perform a flip transformation on the original two-dimensional image and the two-dimensional truth value annotation data according to the centrosymmetric axis to obtain the transformed two-dimensional image and the transformed two-dimensional truth value annotation data. The second transformation module 630 is configured to perform a flip transformation on the three-dimensional truth value annotation data according to the centrosymmetric axis to obtain transformed three-dimensional truth value annotation data, to acquire target transformed three-dimensional truth value annotation data of an object center point of a target detection object in the original two-dimensional image, and to transform the original intrinsic matrix according to the target transformed three-dimensional truth value annotation data to obtain the transformed intrinsic matrix.

Optionally, the second transformation module 630 is configured to transform the original intrinsic matrix into a transformation equation set according to the target transformed three-dimensional truth value annotation data, to construct a target matrix equation according to the transformation equation set and a transformed matrix parameter of the transformed intrinsic matrix, to solve the target matrix equation to obtain a solution result of the target matrix equation, and to generate the transformed intrinsic matrix according to the solution result of the target matrix equation.

Optionally, the second transformation module 630 is configured to acquire target normalization projection coordinates of the object center point of the target detection object in the original two-dimensional image according to the target transformed three-dimensional truth value annotation data and the original intrinsic matrix and transform the original intrinsic matrix into the transformation equation set according to the target normalization projection coordinates and the target transformed three-dimensional truth value annotation data.

Optionally, the second transformation module 630 is configured to construct a target equation set according to the transformation equation set and the transformed matrix parameter of the transformed intrinsic matrix, to construct a benchmark matrix equation according to the target equation set, and to expand matrix elements of the benchmark matrix equation according to the transformed three-dimensional truth value annotation data to obtain the target matrix equation.

Optionally, the second transformation module 630 is configured to determine a target least-squares solution method and solve the target matrix equation according to the target least-squares solution method to obtain the solution result of the target matrix equation.

The preceding three-dimensional data augmentation apparatus may perform the three-dimensional data augmentation method according to any embodiment of the present disclosure and has functional modules and beneficial effects corresponding to the performed method. For technical details not described in detail in this embodiment, reference may be made to the three-dimensional data augmentation method according to any embodiment of the present disclosure.

The preceding three-dimensional data augmentation apparatus can perform the three-dimensional data augmentation method in embodiments of the present disclosure. Therefore, based on the three-dimensional data augmentation method described in embodiments of the present disclosure, those skilled in the art can understand embodiments of the three-dimensional data augmentation apparatus provided in this embodiment and various variations thereof. Thus, how the three-dimensional data augmentation apparatus implements the three-dimensional data augmentation method in embodiments of the present disclosure is not described in detail here. Any apparatus used by those skilled in the art to implement the three-dimensional data augmentation method in embodiments of the present disclosure falls within the scope of the present disclosure.

In an example, FIG. 7 is a diagram illustrating the structure of a model training apparatus according to an embodiment of the present disclosure. This embodiment is suitable for the case where a target detection network model is trained by using three-dimension sample data obtained through the preceding data augmentation processing method. The apparatus may be implemented by software and/or hardware and may be specifically integrated in an electronic device. The electronic device may be a terminal device or a server device. Embodiments of the present disclosure do not limit the specific type of the electronic device.

The model training apparatus 700 shown in FIG. 7 includes a sample data acquisition module 710 and a model training module 720 as follows.

The sample data acquisition module 710 is configured to acquire target detection sample data. The target detection sample data includes original image data and three-dimensional augmentation image data obtained by performing data augmentation according to the original image data. The three-dimensional augmentation image data is obtained through any preceding three-dimensional data augmentation apparatus.

The model training module 720 is configured to train a target detection network model according to the target detection sample data.

The preceding model training apparatus may perform the model training method according to any embodiment of the present disclosure and has function modules and beneficial effects corresponding to the performed method. For technical details not described in detail in this embodiment, reference may be made to the model training method according to any embodiment of the present disclosure.

The preceding model training apparatus is an apparatus that can perform the model training method in embodiments of the present disclosure. Therefore, based on the model training method described in embodiments of the present disclosure, those skilled in the art can understand embodiments of the model training apparatus in this embodiment and various variations thereof. Thus, how the model training apparatus implements the model training method in embodiments of the present disclosure is not described in detail here. Any apparatus used by those skilled in the art to implement the model training method in embodiments of the present disclosure falls within the scope of the present disclosure.

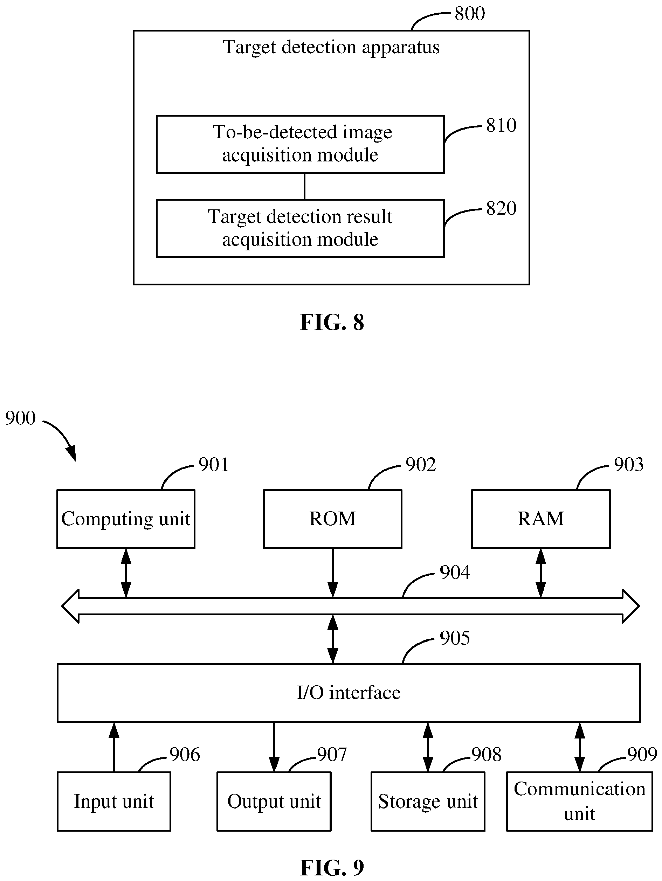

In an example, FIG. 8 is a diagram illustrating the structure of a target detection apparatus according to an embodiment of the present disclosure. This embodiment is suitable for the case where three-dimensional target detection is performed by using the target detection network model obtained by being trained through the preceding model training method. The apparatus may be implemented by software and/or hardware and may be integrated in an electronic device. The electronic device may be a terminal device or a server device. Embodiments of the present disclosure do not limit the specific type of the electronic device.

The target detection apparatus 800 shown in FIG. 8 includes a to-be-detected image acquisition module 810 and a target detection result acquisition module 820.

The to-be-detected image acquisition module 810 is configured to acquire a to-be-detected image.

The target detection result acquisition module 820 is configured to input the to-be-detected image into a target detection network model to obtain a target detection result of the target detection network model.

The target detection network model is obtained by being trained through the preceding model training apparatus.

The preceding target detection apparatus may perform the target detection method according to any embodiment of the present disclosure and has function modules and beneficial effects corresponding to the performed method. For technical details not described in detail in this embodiment, reference may be made to the target detection method according to any embodiment of the present disclosure.

The preceding target detection apparatus is an apparatus that can perform the target detection method in embodiments of the present disclosure. Therefore, based on the target detection method described in embodiments of the present disclosure, those skilled in the art can understand embodiments of the target detection apparatus in this embodiment and various variations thereof. Thus, how the target detection apparatus implements the target detection method in embodiments of the present disclosure is not described in detail here. Any apparatus used by those skilled in the art to implement the target detection method in embodiments of the present disclosure falls within the scope of the present disclosure.

In an example, the present disclosure further provides an electronic device, a readable storage medium, and a computer program product.

FIG. 9 is a block diagram of an electronic device 900 for implementing embodiments of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device, or a similar computing apparatus. Herein the shown components, the connections and relationships between these components, and the functions of these components are illustrative only and are not intended to limit the implementation of the present disclosure as described and/or claimed herein.

As shown in FIG. 9, the device 900 includes a computing unit 901. The computing unit 901 may perform various types of appropriate operations and processing based on a computer program stored in a read-only memory (ROM) 902 or a computer program loaded from a storage unit 908 to a random-access memory (RAM) 903. Various programs and data required for operations of the device 900 may also be stored in the RAM 903. The computing unit 901, the ROM 902, and the RAM 903 are connected to each other through a bus 904. An input/output (I/O) interface 905 is also connected to the bus 904.

Multiple components in the device 900 are connected to the I/O interface 905. The multiple components include an input unit 906 such as a keyboard and a mouse, an output unit 907 such as various types of displays and speakers, the storage unit 908 such as a magnetic disk and an optical disk, and a communication unit 909 such as a network card, a modem and a wireless communication transceiver. The communication unit 909 allows the device 900 to exchange information/data with other devices over a computer network such as the Internet and/or over various telecommunication networks.

The computing unit 901 may be a general-purpose and/or special-purpose processing component having processing and computing capabilities. Examples of the computing unit 901 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 901 performs each preceding method and processing, such as a three-dimensional data augmentation method, a model training method, or a target detection method. For example, in some embodiments, the three-dimensional data augmentation method, the model training method, or the target detection method may be implemented as a computer software program tangibly contained in a machine-readable medium such as the storage unit 908. In some embodiments, part or all of computer programs may be loaded and/or installed on the device 900 via the ROM 902 and/or the communication unit 909. When the computer programs are loaded into the RAM 903 and executed by the computing unit 901, one or more steps of the preceding three-dimensional data augmentation method, one or more steps of the preceding model training method, or one or more steps of the preceding target detection method may be performed. Alternatively, in other embodiments, the computing unit 901 may be configured, in any other suitable manner (for example, by means of firmware), to perform the three-dimensional data augmentation method, the model training method, or the target detection method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device and at least one output device and transmitting the data and instructions to the memory system, the at least one input device and the at least one output device.

Program codes for implementation of the methods of the present disclosure may be written in one programming language or any combination of multiple programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may be executed entirely on a machine, partly on a machine, as a stand-alone software package, partly on a machine and partly on a remote machine, or entirely on a remote machine or a server.

In the context of the present disclosure, the machine-readable medium may be a tangible medium that may include or store a program that is used by or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display device for displaying information to the user, such as a cathode-ray tube (CRT) or a liquid-crystal display (LCD) monitor, and a keyboard and a pointing device such as a mouse or a trackball through which the user can provide input for the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS). The server may also be a server of a distributed system, or a server combined with a blockchain.

In embodiments of the present disclosure, the acquired original two-dimensional image and the acquired two-dimensional truth value annotation data matching the original two-dimensional image are transformed by using the target transformation element to obtain the transformed two-dimensional image and the transformed two-dimensional truth value annotation data. Moreover, the original intrinsic matrix is transformed according to the target transformation element to obtain the transformed intrinsic matrix so that the two-dimensional projection is performed on the three-dimensional truth value annotation data according to the transformed intrinsic matrix to obtain the projected truth value annotation data. Finally, the three-dimensional augmentation image data is generated according to the transformed two-dimensional image, the transformed two-dimensional truth value annotation data, and the projected truth value annotation data. In this manner, data augmentation is implemented on the original two-dimensional image and the truth value annotation data matching the original two-dimensional image. After the three-dimensional augmentation image data is obtained, the original image data and the three-dimensional augmentation image data may be taken as the target detection sample data to train the target detection network model. Thus, the three-dimensional target detection is performed on the to-be-detected image according to the target detection network model obtained through training so as to obtain the final target detection result. Accordingly, problems in the related art, including a high data annotation cost and difficulty in guaranteeing data diversity when data augmentation processing is performed on the sample data of the three-dimensional target detection, are solved. Moreover, problems, including the low accuracy and recall rate when the three-dimensional target detection is performed on the target detection network model obtained by being trained according to the sample data after data augmentation, are also solved. On the premise of not increasing costs of data collection and data annotation, three-dimensional sample data can be expanded greatly, improving the diversity of the three-dimensional sample data and thereby improving the accuracy and recall rate of the three-dimensional target detection.

On the basis of the preceding embodiments, embodiments of the present disclosure further provide an autonomous vehicle. The autonomous vehicle includes a vehicle body and the electronic device described in the preceding embodiments.

It is to be understood that various forms of the preceding flows may be used with steps reordered, added, or removed. For example, the steps described in the present disclosure may be executed in parallel, in sequence or in a different order as long as the desired results of the technical solutions disclosed in the present disclosure can be achieved. The execution sequence of these steps is not limited herein.

The scope of the present disclosure is not limited to the preceding embodiments. It is to be understood by those skilled in the art that various modifications, combinations, subcombinations, and substitutions may be made according to design requirements and other factors. Any modification, equivalent substitution, improvement and the like made within the spirit and principle of the present disclosure falls within the scope of the present disclosure.

**Claims**

1. A three-dimensional data augmentation method, comprising:

   acquiring (S110, S210, 5310) an original two-dimensional image and truth value annotation data matching the original two-dimensional image, wherein the truth value annotation data comprises two-dimensional truth value annotation data and three-dimensional truth value annotation data;
   transforming (S120) the original two-dimensional image and the two-dimensional truth value annotation data according to a target transformation element to obtain a transformed two-dimensional image and transformed two-dimensional truth value annotation data;
   transforming (S 130) an original intrinsic matrix according to the target transformation element to obtain a transformed intrinsic matrix;
   performing (S140, S240, S360) a two-dimensional projection on the three-dimensional truth value annotation data according to the transformed intrinsic matrix to obtain projected truth value annotation data; and
   generating (S150, S250, S370) three-dimensional augmentation image data according to the transformed two-dimensional image, the transformed two-dimensional truth value annotation data, and the projected truth value annotation data.

2. The method according to claim 1, wherein the target transformation element comprises an affine transformation matrix, wherein transforming (S120) the original two-dimensional image and the two-dimensional truth value annotation data according to the target transformation element to obtain the transformed two-dimensional image and the transformed two-dimensional truth value annotation data comprises:

   performing (S220) an affine transformation on the original two-dimensional image and the two-dimensional truth value annotation data according to the affine transformation matrix to obtain the transformed two-dimensional image and the transformed two-dimensional truth value annotation data; and
   wherein transforming (S130) the original intrinsic matrix according to the target transformation element to obtain the transformed intrinsic matrix comprises:
   performing (S230) an affine transformation on the original intrinsic matrix according to the affine transformation matrix to obtain the transformed intrinsic matrix.

3. The method according to claim 2, wherein the affine transformation matrix comprises at least one of the following: a scaling transformation matrix, a translation transformation matrix, a rotation transformation matrix, a horizontal shear matrix, a vertical shear matrix, a reflection matrix relative to an original point, a horizontal reflection matrix, or a vertical reflection matrix.

4. The method according to claim 1, wherein the target transformation element comprises a centrosymmetric axis, wherein transforming (S120) the original two-dimensional image and the two-dimensional truth value annotation data according to the target transformation element to obtain the transformed two-dimensional image and the transformed two-dimensional truth value annotation data comprises:

   performing (S320) a flip transformation on the original two-dimensional image and the two-dimensional truth value annotation data according to the centrosymmetric axis to obtain the transformed two-dimensional image and the transformed two-dimensional truth value annotation data; and
   wherein transforming (S 130) the original intrinsic matrix according to the target transformation element to obtain the transformed intrinsic matrix comprises:

      performing (S330) a flip transformation on the three-dimensional truth value annotation data according to the centrosymmetric axis to obtain transformed three-dimensional truth value annotation data;
      acquiring (S340) target transformed three-dimensional truth value annotation data of an object center point of a target detection object in the original two-dimensional image; and
      transforming (S350) the original intrinsic matrix according to the target transformed three-dimensional truth value annotation data to obtain the transformed intrinsic matrix.

5. The method according to claim 4, wherein transforming (S350) the original intrinsic matrix according to the target transformed three-dimensional truth value annotation data to obtain the transformed intrinsic matrix comprises:

   transforming the original intrinsic matrix into a transformation equation set according to the target transformed three-dimensional truth value annotation data;

constructing a target matrix equation according to the transformation equation set and a transformed matrix parameter of the transformed intrinsic matrix;

solving the target matrix equation to obtain a solution result of the target matrix equation; and

generating the transformed intrinsic matrix according to the solution result of the target matrix equation.

6. The method according to claim 5, wherein transforming the original intrinsic matrix into the transformation equation set according to the target transformed three-dimensional truth value annotation data comprises:

acquiring target normalization projection coordinates of the object center point of the target detection object in the original two-dimensional image according to the target transformed three-dimensional truth value annotation data and the original intrinsic matrix; and

transforming the original intrinsic matrix into the transformation equation set according to the target normalization projection coordinates and the target transformed three-dimensional truth value annotation data.

7. The method according to claim 6, wherein constructing the target matrix equation according to the transformation equation set and the transformed matrix parameter of the transformed intrinsic matrix comprises:

constructing a target equation set according to the transformation equation set and the transformed matrix parameter of the transformed intrinsic matrix;

constructing a benchmark matrix equation according to the target equation set; and

expanding matrix elements of the benchmark matrix equation according to the transformed three-dimensional truth value annotation data to obtain the target matrix equation.

8. The method according to claim 5, wherein solving the target matrix equation to obtain the solution result of the target matrix equation comprises:

determining a target least-squares solution method; and

solving the target matrix equation according to the target least-squares solution method to obtain the solution result of the target matrix equation.

9. A model training method, comprising:

acquiring (S410) target detection sample data, wherein the target detection sample data comprises original image data and three-dimensional augmentation image data obtained by performing data augmentation according to the original image data, and the three-dimensional augmentation image data is obtained through the three-dimensional data augmentation method according to any one of claims 1 to 8; and

training (S420) a target detection network model according to the target detection sample data.

10. A target detection method, comprising:

acquiring (S510) a to-be-detected image; and

inputting (S520) the to-be-detected image into a target detection network model to obtain a target detection result of the target detection network model,

wherein the target detection network model is obtained by being trained through the model training method according to claim 9.

11. A three-dimensional data augmentation apparatus (600), comprising:

an image data acquisition module (610) configured to acquire an original two-dimensional image and truth value annotation data matching the original two-dimensional image, wherein the truth value annotation data comprises two-dimensional truth value annotation data and three-dimensional truth value annotation data;

a first transformation module (620) configured to transform the original two-dimensional image and the two-dimensional truth value annotation data according to a target transformation element to obtain a transformed two-dimensional image and transformed two-dimensional truth value annotation data;

a second transformation module (630) configured to transform an original intrinsic matrix according to the target transformation element to obtain a transformed intrinsic matrix;

a two-dimensional projection module (640) configured to perform a two-dimensional projection on the three-dimensional truth value annotation data according to the transformed intrinsic matrix to obtain projected truth value annotation data; and

a three-dimensional augmentation image data generation module (650) configured to generate three-dimensional augmentation image data according to the transformed two-dimensional image, the transformed two-dimensional truth value annotation data, and the projected truth value annotation data.

12. An electronic device, comprising:

at least one processor; and

a memory communicatively connected to the at least one processor,

wherein the memory stores instructions executable by the at least one processor, and the instructions are executed by the at least one processor to cause the at least one processor to perform the three-dimensional data augmentation method according to any one of claims 1 to 8, the model training method according to claim 9, or the target detection method according to claim 10.

13. A non-transitory computer-readable storage medium storing computer instructions, wherein the computer instructions are used for causing a computer to perform the three-dimensional data augmentation method according to any one of claims 1 to 8, the model training method according to claim 9, or the target detection method according to claim 10.

14. A computer program, which, when executed by a processor, causes the processor to perform the three-dimensional data augmentation method according to any one of claims 1 to 8, the model training method according to claim 9, or the target detection method according to claim 10.

15. An autonomous vehicle, comprising the electronic device according to claim 12.

Acquire an original two-dimensional image and truth value annotation data matching the original two-dimensional image, where the truth value annotation data includes two-dimensional truth value annotation data and three-dimensional truth value annotation data

~ S110

Transform the original two-dimensional image and the two-dimensional truth value annotation data according to a target transformation element to obtain a transformed two-dimensional image and transformed two-dimensional truth value annotation data

~ S120

Transform an original intrinsic matrix according to the target transformation element to obtain a transformed intrinsic matrix

~ S130

Perform a two-dimensional projection on the three-dimensional truth value annotation data according to the transformed intrinsic matrix to obtain projected truth value annotation data

~ S140

Generate three-dimensional augmentation image data according to the transformed two-dimensional image, the transformed two-dimensional truth value annotation data, and the projected truth value annotation data

~ S150

**FIG. 1**

Acquire an original two-dimensional image and truth value annotation data matching the original two-dimensional image ⟋ S210

Perform an affine transformation on the original two-dimensional image and the two-dimensional truth value annotation data according to an affine transformation matrix to obtain a transformed two-dimensional image and a transformed two-dimensional truth value annotation data ⟋ S220

Perform an affine transformation on the original intrinsic matrix according to the affine transformation matrix to obtain a transformed intrinsic matrix ⟋ S230

Perform a two-dimensional projection on the three-dimensional truth value annotation data according to the transformed intrinsic matrix to obtain projected truth value annotation data ⟋ S240

Generate three-dimensional augmentation image data according to the transformed two-dimensional image, the transformed two-dimensional truth value annotation data, and the projected truth value annotation data ⟋ S250

**FIG. 2**

Acquire an original two-dimensional image and truth value annotation data matching the original two-dimensional image ⟋ S310

Perform a flip transformation on the original two-dimensional image and the two-dimensional truth value annotation data according to a centrosymmetric axis to obtain a transformed two-dimensional image and transformed two-dimensional truth value annotation data ⟋ S320

Perform a flip transformation on the three-dimensional truth value annotation data according to the centrosymmetric axis to obtain transformed three-dimensional truth value annotation data ⟋ S330

Acquire target transformed three-dimensional truth value annotation data of an object center point of a target detection object in the original two-dimensional image ⟋ S340

Transform an original intrinsic matrix according to the target transformed three-dimensional truth value annotation data to obtain a transformed intrinsic matrix ⟋ S350

Perform a two-dimensional projection on the three-dimensional truth value annotation data according to the transformed intrinsic matrix to obtain projected truth value annotation data ⟋ S360

Generate three-dimensional augmentation image data according to the transformed two-dimensional image, the transformed two-dimensional truth value annotation data, and the projected truth value annotation data ⟋ S370

**FIG. 3**

Acquire target detection sample data      S410

Train a target detection network model according to the target detection sample data      S420

**FIG. 4**

Acquire a to-be-detected image      S510

Input the to-be-detected image into a target detection network model to obtain a target detection result of the target detection network model      S520

**FIG. 5**

600

┌─────────────────────────────────────────────┐
│  Three-dimensional data augmentation          │
│  apparatus                                     │
│                                                │
│   ┌──────────────────────────────┐  610       │
│   │  Image data acquisition module│            │
│   └──────────────────────────────┘            │
│                                                │
│   ┌──────────────────────────────┐  620       │
│   │  First transformation module  │            │
│   └──────────────────────────────┘            │
│                                                │
│   ┌──────────────────────────────┐  630       │
│   │  Second transformation module │            │
│   └──────────────────────────────┘            │
│                                                │
│   ┌──────────────────────────────┐  640       │
│   │  Two-dimensional projection    │            │
│   │  module                        │            │
│   └──────────────────────────────┘            │
│                                                │
│   ┌──────────────────────────────┐  650       │
│   │  Three-dimensional augmentation│            │
│   │  image data generation module  │            │
│   └──────────────────────────────┘            │
└─────────────────────────────────────────────┘

**FIG. 6**

700

┌─────────────────────────────────────────────┐
│  Model training apparatus                      │
│                                                │
│   ┌──────────────────────────────┐  710       │
│   │  Sample data acquisition module│            │
│   └──────────────────────────────┘            │
│                                                │
│   ┌──────────────────────────────┐  720       │
│   │  Model training module         │            │
│   └──────────────────────────────┘            │
└─────────────────────────────────────────────┘

**FIG. 7**

800

Target detection apparatus

To-be-detected image acquisition module — 810

Target detection result acquisition module — 820

**FIG. 8**

900

Computing unit — 901

ROM — 902

RAM — 903

904

905

I/O interface

Input unit — 906

Output unit — 907

Storage unit — 908

Communication unit — 909

**FIG. 9**

Europäisches
Patentamt
European
Patent Office
Office européen
des brevets

# EUROPEAN SEARCH REPORT

Application Number

EP 22 21 4090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG YAMING ET AL: "A Refined 3D Pose Dataset for Fine-Grained Object Categories", 2019 IEEE/CVF INTERNATIONAL CONFERENCE ON COMPUTER VISION WORKSHOP (ICCVW), IEEE, 27 October 2019 (2019-10-27), pages 2797-2806, XP033732447, DOI: 10.1109/ICCVW.2019.00341 [retrieved on 2020-03-02] | 1-3,9-15 | INV. G06T7/73 |
| A | * section 3. Dataset Construction * ----- | 4-8 | |
| A | LEI KE ET AL: "GSNet: Joint Vehicle Pose and Shape Reconstruction with Geometrical and Scene-aware Supervision", ARXIV.ORG, CORNELL UNIVERSITY LIBRARY, 201 OLIN LIBRARY CORNELL UNIVERSITY ITHACA, NY 14853, 26 July 2020 (2020-07-26), XP081727316, * the whole document * ----- | 1-15 | |

TECHNICAL FIELDS
SEARCHED      (IPC)

G06T

The present search report has been drawn up for all claims

| Place of search | Date of completion of the search | Examiner |
|---|---|---|
| Munich | 19 May 2023 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)